# EUROPEAN PATENT SPECIFICATION

(11) **EP 3 789 956 B1**
(45) Date of publication and mention of the grant of the patent: **10.12.2025**
(21) Application number: 19196081.4
(22) Date of filing: 09.09.2019
(51) Int. Cl.: G06T 7/00

(54) **METHOD AND SYSTEM FOR ANALYZING THE MECHANICAL RESPONSE OF MICROSTRUCTURES UNDER INVESTIGATION**
VERFAHREN UND SYSTEM ZUR ANALYSE DER MECHANISCHEN REAKTION VON UNTERSUCHTEN MIKROSTRUKTUREN
PROCÉDÉ ET SYSTÈME D'ANALYSE DE LA RÉPONSE MÉCANIQUE DE MICROSTRUCTURES SOUS INVESTIGATION

(43) Date of publication of application: 10.03.2021
(73) Proprietor: Robert Bosch GmbH, 70442 Stuttgart (DE)
(72) Inventor: Kuhn, Jannick, 76137 Karlsruhe (DE); Finnie, Nicole Ying, 71034 Boeblingen (DE); Schaefer, Benjamin Josef, 73119 Zell Unter Aichelberg (DE); Wagner, Joerg, 71272 Renningen (DE); Spitz, Jonathan, 71229 Leonberg (DE)

(56) References cited:
- CN-A- 108 229 062
- BRIAN GALLAGHER ET AL: "Predicting Compressive Strength of Consolidated Molecular Solids Using Computer Vision and Deep Learning", ARXIV.ORG, CORNELL UNIVERSITY LIBRARY, 201 OLIN LIBRARY CORNELL UNIVERSITY ITHACA, NY 14853, 5 June 2019 (2019-06-05), XP081528937
- XIANG LI ET AL: "Predicting the effective mechanical property of heterogeneous materials by image based modeling and deep learning", COMPUTER METHODS IN APPLIED MECHANICS AND ENGINEERING, vol. 347, 14 January 2019 (2019-01-14), AMSTERDAM, NL, pages 735 - 753, XP055673998, ISSN: 0045-7825, DOI: 10.1016/j.cma.2019.01.005
- XUEBIN QIN ET AL: "Prediction of Mechanical Strength Based on Deep Learning Using the Scanning Electron Image of Microscopic Cemented Paste Backfill", ADVANCES IN CIVIL ENGINEERING, vol. 2018, 1 November 2018 (2018-11-01), pages 1 - 7, XP055673995, ISSN: 1687-8086, DOI: 10.1155/2018/6245728
- KHOSRAVI A ET AL: "Comprehensive Review of Neural Network-Based Prediction Intervals and New Advances", IEEE TRANSACTIONS ON NEURAL NETWORKS, IEEE SERVICE CENTER, PISCATAWAY, NJ, US, vol. 22, no. 9, 1 September 2011 (2011-09-01), pages 1341 - 1356, XP011411464, ISSN: 1045-9227, DOI: 10.1109/TNN.2011.2162110
- "Microstructural Design of Advanced Engineering Materials", 31 July 2013, WILEY, ISBN: 978-3-527-65281-5, article ROTERS FRANZ ET AL: "Crystal Plasticity Modeling", pages: 41 - 67, XP093285911, DOI: 10.1002/9783527652815.ch03

## Description

### Technical field

The present invention relates to micromechanical simulations of mechanical properties of a workpiece having a particular microstructure. Conventionally, these simulations can be based on either experimentally obtained grain data, e.g. as an EBSD (Electron Backscatter Diffraction) image, or on synthetically generated morphologies. Generally, it is a goal to simulate the microstructure-dependent mechanical behavior of a workpiece, e.g. by methods, such as the Crystal Plasticity Finite Element Method (CPFEM).

The simulation of a microstructure to evaluate the lifetime of a workpiece with the underlying microstructure is based on fatigue indicator parameters which correspond to a material meta-response. Such a micromechanical simulation using an FEM-method is usually very complex and time-consuming.

### Prior art

Brian Gallagher et al: "Predicting Compressive Strength of Consolidated Molecular Solids Using Computer Vision and Deep Learning, Arxiv. Org, Cornell University Library, 2010, Olin Library Cornell University Ithaca, NY 14853, Xiang Li et al: "Predicting the effective mechanical property of heterogeneous materials by image based modeling and deep learning", Coputer Methods in Applied Mechanics and Engineering, vol. 347, pages 735-753, Xuebin Qin et al: "Prediction of Mechanical Strength Based on Deep Learning Using the Scanning Electron Image of Microscopic Cemented Paste Backfill", Advances in Civil Engineering, vol. 2018, pages 1-7, and CN 108 229 062 A The above mentioned prior art disclose methods for evaluating mechanical properties of a material.

### Summary of the invention

According to the present invention, a method for evaluating a mechanical property of a material of a workpiece according to claim 1 and a system according to the further independent claim are provided.

Further embodiments are indicated in the depending subclaims.

Conventionally, the micromechanical response of a material is simulated by means of a Finite-Element-Method based on a microstructure EBSD image. The microstructure EBSD image is taken from a cutting surface probe of the material of a workpiece to analyze micromechanical stress, strain and energy fields in the microstructure of the material.

One idea of the above method is to replace the costly simulation of the microstructure by means of a neural network which processes the EBSD image to obtain at least one mechanical response array. The micromechanical response array is configured to indicate local stress, strain and/or energy fields over the (cutting) surface showing the microstructure being analyzed. In other words, the micromechanical response array indicate a local mechanical condition for any pixel or pixel group of the EBSD image.

Due to the training of the neural network, the obtained mechanical response arrays shall correspond to or resemble the resulting mechanical response arrays obtained by the conventional simulation. Using the trained neural network to obtain the results of the time-consuming micromechanical simulation allows to get a quicker indication about the micromechanical properties of a specific material and therefore of the behavior of the material. Thus, the processing of the microstructure images to obtain the mechanical response arrays by means of the neural network is more efficient than by means of the time-consuming micromechanical simulation. Therefore, micromechanical simulation results can be obtained faster.

The determining of the mechanical properties of the material depending on the network output is made by combining the values of the respective mechanical response array pixel by pixel, e.g. by obtaining a minimum, a maximum, a mean of the pixel values of the respective mechanical response array. For instance, the fatigue indicator parameters of the respective mechanical response array can be used to predict the crack initiation time and its position in the given microstructure.

One feature of artificial neural networks may be that in addition to the mechanical response arrays an uncertainty of the predicted result is obtained. According to the invention, the uncertainty of the prediction of the artificial neural network concerning the simulation results is used to decide whether the output of the neural network provides a sufficiently accurate prediction of the mechanical response array of the probed material and whether a conventional micromechanical simulation is to be performed. Hence, using the uncertainty of the resulting mechanical response arrays of the neural network analysis, an indication is obtained whether the neural network analysis can be trusted or not. If the neural network analysis is too uncertain, a conventional simulation run is performed, the results of which is further used for improving the training of the neural network.

According to an embodiment, the artificial neural network may be trained to associate the EBSD image together with a load condition with the one or more micromechanical response arrays; wherein the sample EBSD image of a material and a sample load condition to be probed is provided to obtain the micromechanical response. Further the load condition can be implicit, i.e.: the artificial neural network is trained to model the dependence on a fixed load. The prediction of the artificial neural network thus depends on the input (sample EBSD image) and the implicitly assumed load.

The training samples for the artificial neural network may include EBSD images from real parts, synthetically generated images or both.

Furthermore, the neural network may comprise an autoencoder, particularly a variational autoencoder, having an encoder network, a decoder network and an intermediate layer for holding an intermediate vector as output of the encoder network.

Particularly, the intermediate layer may further be configured to receive and provide at least one further load condition and/or material parameter.

It may be provided, that the one or more micromechanical response arrays may include an array of stress values, strain values and/or energy levels.

Moreover, if the prediction uncertainty is too high, the mechanical properties of the material are obtained by one or more corresponding micromechanical response arrays obtained by a simulation on the EBSD image.

Moreover, the neural network is retrained with the EBSD image of the material to be probed and the results of the simulation.

The mechanical properties may include at least one of strength, elasticity, plasticity, hardness, toughness, brittleness, stiffness, ductility, malleability, impact strength, fatigue and creep.

The mechanical properties of the probed material may be used for estimating the duration of lifetime of a workpiece formed by the material.

According to a further aspect, a system for evaluating mechanical properties of a material particularly of a workpiece is provided, wherein the system is configured to carry out above method.

### Brief description of the drawings

Embodiments are described in more detail in conjunction with the accompanying drawings in which:
- Figure 1: shows a block diagram illustrating the process of a microstructure analysis using a neural network; and
- Figure 2: shows a flowchart illustrating the method for obtaining a mechanical behavior of a material.

### Description of embodiments

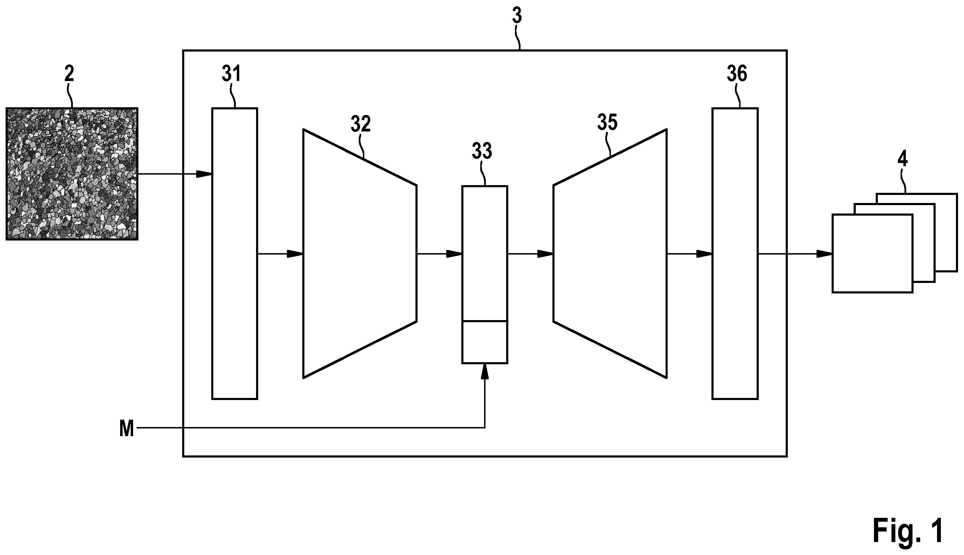

Figure 1 shows a block diagram illustrating the process flow of an analysis of a microstructure image of a cutting surface of a probed material. The microstructure is obtained from a workpiece to be analyzed. The workpiece is cut and polished/etched to obtain a cutting surface which is scanned using an electron backscatter diffraction method as well known in the art, e.g. by means of a Scanning Electron Microscope. Thereby, a so called EBSD image (Electron Backscatter Diffraction) is obtained which forms the basis for an analysis of the micromechanical properties of the probed material of the workpiece.

Conventionally, the EBSD image is used as an input for a micromechanical simulation to obtain one or more micromechanical response arrays indicating the distribution of stress, strain and/or energy levels (fatigue level values) over the cutting surface of the probed material.

The resulting micromechanical response arrays may then be used to calculate the macroscopic mechanical properties of the workpiece made of the specifically probed material, such as the resistance of the material against fatigue, the average lifetime of the workpiece or the like.

One bottleneck for accurately evaluating such macroscopic mechanical properties of a workpiece is the very time-consuming simulation. To overcome the need for a simulation for each material to be newly probed, an artificial neural network shall be applied, which has been trained to output one or more micromechanical response arrays based on a given EBSD image.

As shown in Figure 1, the EBSD image 2 is input to an artificial neural network 3 to obtain the resulting micromechanical response arrays 4. The EBSD image can be experimentally obtained. In the present embodiment the micromechanical response arrays 4 may include arrays indicating the distribution of stress, strain and energy levels over the cutting surface. Usually, the dimension of the EBSD image 2 and the dimension of the resulting micromechanical response arrays 4, i.e. the stress, strain and fatigue level arrays are equal.

The neural network 3 may be provided as a kind of artificial neural network which is able to associate resulting micromechanical response arrays to a given pixel array of an EBSD image. In the present embodiment, the neural network 3 comprises an input layer 31 which may receive color information of each pixel of the EBSD image and forwards them to an encoder network 32, which may be formed as a convolutional neural network. Further, optionally an indication about a mechanical load can be applied to the input layer 31 of the artificial neural network.

The encoder network 32 outputs an intermediate vector in an intermediate layer 33. The intermediate layer 33 may be configured to append an indication about a load condition, such as a global pressure or force, and/or known material parameters M, such as elasticity, yield strength, and the like.

In the following decoder network 35, which may be formed as a convolutional neural network, the intermediate vector of the intermediate layer 33, the mechanical load and the material parameters M are decompressed to obtain output arrays in an output layer 36. The output data may include several channels of the resulting micromechanical response arrays 4. Usually, the dimension of the EBSD image and the dimension of the result stress, strain and energy/fatigue level arrays are equal.

Generally, as each pixel may be dependent on other pixels of the EBSD image as it carries spatial information (such as grids) the artificial neural network learns local spatial, pattern and texture correlation between the EBSD images and the output images.

In the present embodiment, the encoder network 32 and the decoder network 35 may each be implemented as a convolutional neural network which is well-known in the art. The neural network 3 of this kind is generally known as a conditional autoencoder. An autoencoder is a neural network, which can learn efficient data encodings. The input data, here the EBSD image 2, can be dimensionally reduced by configuration and training the encoder network 32 and further the intermediate vector of the intermediate layer 33, the mechanical load and the material parameter M are reconstructed so that the decoder network 35 generates a representation of the micromechanical response arrays 4.

The training of the autoencoder, i.e. the encoder network 32 and the decoder network 35, is performed as commonly known for neural networks of this kind, such as by providing sets of experimentally obtained or synthetically generated EBSD images and resulting micromechanical response arrays 4 which may be obtained by the conventional micromechanical simulation.

Once the neural network 3 has been trained, resulting micromechanical response arrays 4 as resulting images can be obtained by any EBSD image. Furthermore, in case of a Bayes neural network the neural network 3 provides an uncertainty indicating the measure of how reliable the prediction of the neural network 3 is.

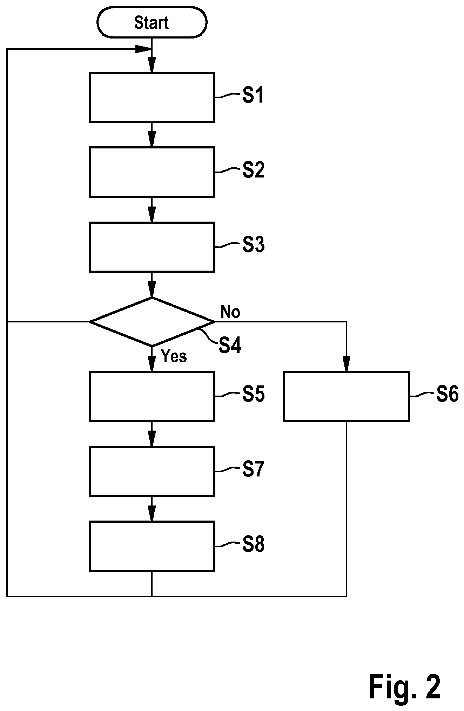

In Figure 2, a flowchart is shown indicating a method for obtaining micromechanical or mechanical parameters from the given EBSD image 2. The method may be implemented as a hardware and/or software algorithm in a data processing device.

In step S1, the EBSD image of the sample is provided. As explained earlier, the EBSD image 2 can be obtained by cutting a workpiece or material, by polishing and etching the cutting surface and by taking an electron backscatter image. An example of such an EBSD image is shown in Figure 1. The EBSD image 2 is available in a standard image format so that an array of pixels, each having a different color code, is provided. The color codes of the pixel array of the EBSD image are forwarded to the neural network 3, particularly to the input layer 31, as input data.

In step S2, the neural network 3, which has been trained before, processes the input data and provides one or more resulting micromechanical response arrays 4, indicating arrays of stress, strain, fatigue/energy level and the like.

In step S3, the uncertainty of the prediction of the resulting micromechanical response arrays 4 may be retrieved from the output of the neural network 3 together with the micromechanical response arrays. The uncertainty of a prediction (its variance) of a neural network usually comes together with the output data. The uncertainty is usually computed by outputting a number of micromechanical response arrays given the same input and computing the mean and standard deviation of the various outputs. Most approaches generate a pixel by pixel uncertainty, which has to be aggregated to a single common uncertainty value. For instance, a maximum, a mean, or a weighted average of the pixel by pixel uncertainty can be calculated to obtain a single common uncertainty value. In case of using a weighted average domain knowledge can be used to assign a weight to the uncertainty of each pixel.

To make the neural network 3 to output different results given the same input can be achieved by e.g. using stochastic dropout or varying some neural network parameters according to a distribution.

In step S4 it is checked whether or not the uncertainty is too high for relying on the processing results of the neural network 3. If it is found that the uncertainty is too high (Alternative: Yes), e.g. if the uncertainty indicates that the resulting micromechanical response arrays have a likelihood of correctness below an accuracy level, the process is continued with step S5 otherwise the process is continued with step S6.

In step S6 the micromechanical properties and/or the mechanical response of the probed material, such as lifetime or resistance against fatigue, are directly obtained by or derived from the micromechanical response arrays 4 in a conventional manner, as known in the art. The fatigue indicator parameters can then be used to predict the crack initiation time and its position in the given microstructure.

Following the process is continued with step S1 for the next material to be probed.

If it is found that the uncertainty is too high, a conventional simulation of the micromechanical properties is performed in step S5.

The resulting simulated micromechanical response arrays are further processed in step S7 to obtain the mechanical properties of the probed material, such as lifetime or resistance against fatigue.

In step S8, the simulation results of a conventional micromechanical simulation and the EBDS image it is based on, can be further used to retrain the neural network 3 so that the neural network 3 is improved for predicting the resulting micromechanical response arrays based on an EBSD image sample. For following evaluation, the retrained neural network 3 can be used.

Following the process is continued with step S1 for the next material to be probed.

## Claims

1. Computer-implemented method for evaluating at least one mechanical property of a material to be probed particularly of a workpiece, comprising the steps of:
- Providing an artificial neural network (3) being trained to associate an Electron Backscatter Diffraction, EBSD, image (2) with one or more micromechanical response arrays (4);
- Providing (S1) a sample EBSD image (2) of the material to be probed for evaluating the at least one mechanical property;
- Applying (S2) the EBSD image to the neural network (3) to obtain as network output one or more corresponding micromechanical response arrays (4);
- Determining (S6) mechanical properties of the material depending on the network output **Characterized in that** the obtained network output further comprises a prediction uncertainty of the neural network (3), wherein, if the prediction uncertainty is too high, the mechanical properties of the material are obtained by one or more corresponding micromechanical response arrays (4) obtained by a simulation on the EBSD image (2), wherein the neural network (3) is retrained with the EBSD image (2) of the material to be probed and the results of the simulation.

2. Method according to claim 1, wherein the artificial neural network (3) is trained to associate the EBSD image (2) together with a load condition with the one or more micromechanical response arrays (4); wherein the sample EBSD image (2) of a material and a sample load condition to be probed is provided to obtain the micromechanical response.

3. Method according to claim 1 or 2, wherein the neural network (3) comprises an autoencoder, particularly a variational autoencoder, having an encoder network (32), a decoder network (35) and an intermediate layer (33) for holding an intermediate vector as output of the encoder network (32).

4. Method according to claim 3, wherein the intermediate layer (33) is further configured to receive and provide at least one further load condition and/or material parameter.

5. Method according to any of the claims 1 to 4, wherein the one or more micromechanical response arrays (4) may include an array of stress values, strain values and/or energy levels.

6. Method according to any of the claims 1 to 5, wherein mechanical properties include at least one of strength, elasticity, plasticity, hardness, toughness, brittleness, stiffness, ductility, malleability, impact strength, fatigue and creep.

7. Method according to any of the claims 1 to 6, wherein the mechanical properties of the probed material are used for estimating the duration of lifetime of a workpiece formed by the material.

8. Method according to any of the claims 1 to 7, wherein the neural network (3) comprises a convolutional neural network.

9. System for evaluating mechanical properties of a material particularly of a workpiece, wherein the system is configured to carry out the method of any of the claims 1 to 8.

10. A computer program comprising instructions which, when the program is executed by a computer, cause the computer to carry out the steps of the method of any of the claims 1 to 8.

11. A machine-readable storage medium comprising instructions which, when executed by a data processing unit, cause the data processing unit to carry out the steps of the method of any of the claims 1 to 8.

## Patentansprüche

1. Computer-implementiertes Verfahren zur Bewertung mindestens einer mechanischen Eigenschaft eines zu prüfenden Materials, insbesondere eines Werkstücks, umfassend die folgenden Schritte:
- Bereitstellen eines künstlichen neuronalen Netzwerks (3), das darauf trainiert wird, ein Elektronenrückstreubeugungsbild, EBSD-Bild, (2) mit einem oder mehreren mikromechanischen Antwortarrays (4) zu assoziieren;
- Bereitstellen (S1) eines Muster-EBSD-Bildes (2) des zu prüfenden Materials zur Bewertung der mindestens einen mechanischen Eigenschaft;
- Anwenden (S2) des EBSD-Bildes auf das neuronale Netzwerk (3), um als Netzwerkausgabe ein oder mehrere entsprechende mikromechanische Antwortarrays (4) zu erhalten;
- Bestimmen (S6) mechanischer Eigenschaften des Materials in Abhängigkeit von der Netzwerkausgabe,
**dadurch gekennzeichnet, dass** die erhaltene Netzwerkausgabe ferner eine Vorhersageunsicherheit des neuronalen Netzwerks (3) umfasst, wobei, falls die Vorhersageunsicherheit zu hoch ist, die mechanischen Eigenschaften des Materials durch ein oder mehrere entsprechende mikromechanische Antwortarrays (4) erhalten werden, die durch eine Simulation an dem EBSD-Bild (2) erhalten werden, wobei das neuronale Netzwerk (3) mit dem EBSD-Bild (2) des zu prüfenden Materials und den Ergebnissen der Simulation neu trainiert wird.

2. Verfahren nach Anspruch 1, wobei das künstliche neuronale Netzwerk (3) darauf trainiert wird, das EBSD-Bild (2) zusammen mit einem Lastzustand mit dem einen oder den mehreren mikromechanischen Antwortarrays (4) zu assoziieren; wobei das Muster-EBSD-Bild (2) eines zu prüfenden Materials und Muster-Lastzustands bereitgestellt wird, um die mikromechanische Antwort zu erhalten.

3. Verfahren nach Anspruch 1 oder 2, wobei das neuronale Netzwerk (3) einen Autoencoder, insbesondere einen Variational Autoencoder, mit einem Encodernetzwerk (32), einem Decodernetzwerk (35) und einer Zwischenschicht (33) zum Halten eines Zwischenvektors als Ausgabe des Encodernetzwerks (32) umfasst.

4. Verfahren nach Anspruch 3, wobei die Zwischenschicht (33) ferner dazu ausgelegt ist, mindestens einen weiteren Lastzustand und/oder Materialparameter zu empfangen und bereitzustellen.

5. Verfahren nach einem der Ansprüche 1 bis 4, wobei das eine oder die mehreren mikromechanischen Antwortarrays (4) ein Array von Spannungswerten, Dehnungswerten und/oder Energieniveaus aufweisen können.

6. Verfahren nach einem der Ansprüche 1 bis 5, wobei die mechanischen Eigenschaften mindestens eines von Festigkeit, Elastizität, Plastizität, Härte, Zähigkeit, Sprödigkeit, Steifheit, Duktilität, Formbarkeit, Schlagfestigkeit, Ermüdung und Kriechen aufweisen.

7. Verfahren nach einem der Ansprüche 1 bis 6, wobei die mechanischen Eigenschaften des geprüften Materials zum Schätzen der Lebensdauer eines durch das Material gebildeten Werkstücks verwendet werden.

8. Verfahren nach einem der Ansprüche 1 bis 7, wobei das neuronale Netzwerk (3) ein neuronales Faltungsnetzwerk umfasst.

9. System zur Bewertung mechanischer Eigenschaften eines Materials, insbesondere eines Werkstücks, wobei das System zum Durchführen des Verfahrens nach einem der Ansprüche 1 bis 8 ausgelegt ist.

10. Computerprogramm, das Anweisungen umfasst, die, wenn das Programm von einem Computer ausgeführt wird, den Computer zum Ausführen der Schritte des Verfahrens nach einem der Ansprüche 1 bis 8 veranlassen.

11. Maschinenlesbares Speichermedium, das Anweisungen umfasst, die, wenn sie von einer Datenverarbeitungseinheit ausgeführt werden, die Datenverarbeitungseinheit zum Ausführen der Schritte des Verfahrens nach einem der Ansprüche 1 bis 8 veranlassen.

## Revendications

1. Procédé informatisé d'évaluation d'au moins une propriété mécanique d'un matériau à sonder, en particulier d'une pièce à usiner, le procédé comprenant les étapes suivantes :
- fournir un réseau neuronal artificiel (3) entraîné pour associer une image de diffraction par rétrodiffusion d'électrons, EBSD, (2) à un ou plusieurs réseaux de réponse micro-mécaniques (4) ;
- fournir (S1) un échantillon d'image EBSD (2) du matériau à sonder pour évaluer l'au moins une propriété mécanique ;
- appliquer (S2) l'image EBSD au réseau neuronal (3) pour obtenir comme sortie de réseau un ou plusieurs réseaux de réponse micro-mécanique correspondants (4) ;
- déterminer (S6) des propriétés mécaniques du matériau en fonction de la sortie du réseau
**caractérisé en ce que** la sortie de réseau obtenue comprend en outre une incertitude de prédiction du réseau neuronal (3), où, si l'incertitude de prédiction est trop élevée, les propriétés mécaniques du matériau sont obtenues par un ou plusieurs réseaux de réponse micro-mécanique correspondants (4) obtenus par une simulation sur l'image EBSD (2), où le réseau neuronal (3) est ré-entraîné avec l'image EBSD (2) du matériau à sonder et les résultats de la simulation.

2. Procédé selon la revendication 1, dans lequel le réseau neuronal artificiel (3) est entraîné pour associer l'image EBSD (2) conjointement avec une condition de charge avec les un ou plusieurs réseaux de réponse micro-mécanique (4) ; où l'échantillon d'image EBSD (2) d'un matériau et une condition de charge échantillon à sonder sont fournies pour obtenir la réponse micro-mécanique.

3. Procédé selon la revendication 1 ou la revendication 2, dans lequel le réseau neuronal (3) comprend un autocodeur, en particulier un autocodeur variation-nel ayant un réseau codeur (32), un réseau décodeur (35) et une couche intermédiaire (33) pour maintenir un vecteur intermédiaire comme sortie du réseau codeur (32).

4. Procédé selon la revendication 3, dans lequel la couche intermédiaire (33) est en outre configurée pour recevoir et fournir au moins un autre état de charge et/ou paramètre de matériau.

5. Procédé selon l'une quelconque des revendications 1 à 4, dans lequel les un ou plusieurs réseaux de réponse micro-mécanique (4) peuvent comprendre un réseau de valeurs de contrainte, de valeurs de déformation et/ou de niveaux d'énergie.

6. Procédé selon l'une quelconque des revendications 1 à 5, dans lequel les propriétés mécaniques comprennent au moins une propriété parmi la résistance, l'élasticité, la plasticité, la dureté, la ténacité, la fragilité, la rigidité, la ductilité, la malléabilité, la résistance aux chocs, la fatigue et le fluage.

7. Procédé selon l'une quelconque des revendications 1 à 6, dans lequel les propriétés mécaniques du matériau sondé sont utilisées pour estimer la durée de vie d'une pièce à usiner formée par le matériau.

8. Procédé selon l'une quelconque des revendications 1 à 7, dans lequel le réseau neuronal (3) comprend un réseau neuronal convolutionnel.

9. Système d'évaluation des propriétés mécaniques d'un matériau, en particulier d'une pièce à usiner, le système étant configuré pour mettre en œuvre le procédé selon l'une quelconque des revendications 1 à 8.

10. Programme d'ordinateur comprenant des instructions qui, lorsque le programme est exécuté par un ordinateur, amènent l'ordinateur à mettre en œuvre les étapes du procédé selon l'une quelconque des revendications 1 à 8.

11. Support de stockage lisible par machine comprenant des instructions qui, lorsqu'elles sont exécutées par une unité de traitement de données, amènent l'unité de traitement de données à mettre en œuvre les étapes du procédé selon l'une quelconque des revendications 1 à 8.
